(19) Europäisches Patentamt
European Patent Office
Office européen des brevets

(11) **EP 1 348 470 B1**

(12) **EUROPEAN PATENT SPECIFICATION**

(45) Date of publication and mention
of the grant of the patent:
**19.05.2010 Bulletin 2010/20**

(51) Int Cl.:
*A63F 13/10* *(2006.01)*

(21) Application number: **03006436.4**

(22) Date of filing: **20.09.1996**

(54) **Three-dimension image processing system**

Dreidimensionales Bildverarbeitungssystem

Système de traitement d'image en trois dimensions

(84) Designated Contracting States:
**DE FR GB**

(30) Priority: **09.10.1995 JP 28800695**

(43) Date of publication of application:
**01.10.2003 Bulletin 2003/40**

(62) Document number(s) of the earlier application(s) in
accordance with Art. 76 EPC:
**96931279.2 / 0 797 139**

(73) Proprietor: **Nintendo Co., Ltd.**
**Kyoto-shi,**
**Kyoto (JP)**

(72) Inventors:
• **Nishiumi, Satoshi,**
**c/o Nintendo Co., Ltd.**
**Kyoto-shi,**
**Kyoto (JP)**
• **Koshima, Kazuo,**
**c/o Nintendo Co., Ltd.**
**Kyoto-shi,**
**Kyoto (JP)**
• **Miyamoto, Shigeru,**
**c/o Nintendo Co., Ltd.**
**Kyoto-shi,**
**Kyoto (JP)**
• **Nishida, Yasunari,**
**c/o Nintendo Co., Ltd.**
**Kyoto-shi,**
**Kyoto (JP)**

(74) Representative: **Watterson, Peer Marten John et al**
**Withers & Rogers LLP**
**Goldings House**
**2 Hays Lane**
**London**
**SE1 2HW (GB)**

(56) References cited:
**GB-A- 2 283 302     US-A- 4 685 678**

EP 1 348 470 B1

**Description**

**FIELD OF ARTS**

This invention relates to three-dimension image processing systems. More particularly, this invention is concerned with a three-dimension image processing system for video game machines or the like, which is adapted to display an object in a manner existing in a three-dimensional space on a display such that the object is moved in accordance with the direction and amount of inclination of an operating member, such as an analogue joystick, of an operating device.

**PRIOR ARTS**

The conventional video game machine has a cross-shaped key which is provided on a controller thereof so that the object displayed on the display is moved by the operation of the cross key. Such a cross key is so-called a digital joystick, by which only the direction of movement is to be designated for the object, and the speed of movement thereof is impossible to designate.

There also is a method that the moving speed of the object is varied in dependence upon the length of time period over which the cross key as stated above is being depressed. In such method, acceleration or deceleration is given for the object at a constant acceleration rate or a constant deceleration rate by each constant depression time period. Although, in this method, the moving direction and the moving speed of the object can be controlled even by using a digital joystick, there involves a disadvantage as stated below. That is, the moving speed for the object is varied merely at a constant rate of acceleration or deceleration determined by software calculation, so that it is impossible to arbitrary control the speed of movement. Furthermore, the speed is determined by the period of time being depressed, which requires that the cross key has to be kept in being depressed for a certain period or longer, resulting in poor responsibility.

Under such circumstances, the present applicant has proposed an art by Japanese Provisional Utility Model Publication No. H2-41342, laid open to public on March 22, 1990, which has three contacts arranged in one direction on a cross key thereof so that the moving speed, besides the moving direction, is varied for the object by the utilization of changing turning-on of contacts in dependence upon depression amount of the cross key.

In this prior art, however, the direction of movement is limited to four directions of upper, lower, left and right (and intermediate directions thereof), and the speed of movement is varied only between three stages of speed. That is, in this prior art there still exists limitation against the moving direction and the moving speed.

Incidentally, although there are already known game machines employing an analog joystick for a control lever of an aircraft, such analog joystick of the game machines is for controlling the inclination of the aircraft, and wherein control is impossible for the moving direction or the moving speed.

US-A-4685678 discloses a joystick position transducer system for use in a video game. The joystick position transducer includes a pair of inductors each having a movable slug, the slugs being coupled to a control handle or knob by means of respective linkages. The control handle or knob is responsive to external stimulus to move the slugs, the inductors providing respective first and second analog signals which are proportional to the position of the slugs. Coupled to each of the inductors is an oscillator and counter for providing a pulsed output, the pulse width of which is proportional to the position of the respective slug. A controller, such as a computer control or logic sequence circuit, is provided to control the oscillators and counters. The controller is further responsive to the counter outputs to control a display presentation on a video display coupled thereto.

GB-A-2 283 302 discloses a video game system which includes two steering units operated by a user. Different positions of the steering units are used to calculate direction and rotation information. This information is then used by the system to control a direction and manner of movement of a game object.

**SUMMARY OF THE INVENTION**

It is therefore the primary object of the present invention to provide an image processing system which is high in responsibility and capable of controlling the moving direction as well as the moving speed of an object operable object.

In accordance with the present invention, there is provided in a three-dimension image processing system including an image processing apparatus connected to a display to generate image data for displaying an object existing in a three-dimensional space on said display, and an operating device including an operating member having a base end rotatably supported, a free end operable by an operator, and an inclination amount data output means which detects an inclination amount to output inclination amount data, so that the image data is varied depending on movement of said operating member, wherein a program storing medium is stored with a program for generating the image data, said program storing medium comprising the program adapted for: (a) determining a moving direction of the object in the three-dimensional space based on an inclination direction of said operating member; (b) determining a moving speed of the object on said display based on the inclination amount; (c) determining a position of the object in the three-dimensional space depending on the moving direction and the moving speed; and (d) outputting the image data for displaying the object at the position thus determined, characterised in that said image processing apparatus includes a storing means that stores an actual moving amount of the object, and said program is adapted in said step (b) for (b1) determining the moving speed based on the inclination amount data, (b2) comparing the actual moving amount stored by said storing means with the determined moving amount, and (b3) increasing or decreasing the determined moving amount depending on the comparing result.

The operating device may be for example an analog joystick, which includes a base end supported rotatably with a given angle range and a free end for being operated by an operator so that the operating member is inclined to arbitrary directions in accordance with operation by the operator. For example, an inclination amount data output means such as an X counter and a Y counter detects the amount of inclination of the operating member to output inclination amount data.

The image processing apparatus possesses a program storing means, wherein the program storing means is preferably an external storing means detachably attached to the main body of the image processing apparatus. According to a program in the program storing means, a direction means and a moving amount determining means comprised for example of a CPU respectively determine moving direction of the object in the three-dimensional space and moving amount of the object to be moved in one frame on the display, based on the inclination amount data from the operating device.

Specifically, the count values of the X counter and the Y counter are converted by normalizing into the UV coordinate. The CPU determines the inclination amount (L) and the inclination direction ($tan^{-1}$) by the UV coordinate value (u, v). The direction determining means is for example the CPU, which determines the moving direction of the object based on the inclination direction ($tan^{-1}$) thereof and the point of eye at which the object is considered to be photographed in the three-dimensional space (camera angle). The moving amount determining means is for example the CPU, which determines the moving amount of the object within one frame, i.e., the moving speed, based on the inclination amount (L) and the maximum speed (max-speed).

Therefore the position determining means determines the position of the object in the three-dimensional space in dependence upon the moving direction and the moving amount. Consequently, the image data output means outputs image data for display of the object at the position thus determined.

In accordance with the present invention, the operation of one operating device such as an analog joystick provides control on the moving direction and the moving amount (moving speed) of the object.

The above and other objects, features, aspects, and advantage of the present invention will become more apparent from the ensuing detailed description of the present invention when taken in conjunction with the accompanying drawings.

## BRIEF DESCRIPTION OF THE DRAWINGS

Figure 1 is a schematic illustrative view showing one embodiment of the present invention;
Figure 2 is a block diagram showing in detail an image processing apparatus in the Figure 1 embodiment;
Figure 3 is a block diagram showing in more detail a bus control circuit in the Figure 2 embodiment;
Figure 4 is an illustrative view showing a memory map of a RAM in the Figure 2 embodiment;
Figure 5 is a block diagram showing in detail a controller control circuit in the Figure 2 embodiment;
Figure 6 is an illustrative view showing a memory map of a RAM in Figure 5;
Figure 7 is a perspective view of a controller in the Figure 2 embodiment as viewed from the above;
Figure 8 is a perspective view of the controller in the Figure 2 embodiment as viewed from the bottom;
Figure 9 is a block diagram showing in detail the controller and an extension device;
Figure 10 is an illustrative view showing data of an analog joystick of the controller and respective buttons;
Figure 11 is a flowchart showing the operation of a CPU in the Figure 2 embodiment;
Figure 12 is a flowchart showing the operation of the bus control circuit in the Figure 2 embodiment, i.e., an RCP (Reality Co-Processor) in Figure 3;
Figure 13 is a flowchart showing the operation of the controller control circuit in the Figure 2 embodiment;
Figure 14 is a flowchart showing a subroutine for varying the position of the object in the Figure 2 embodiment;
Figure 15 is an illustrative view showing the relation between the inclinable range of the analog joystick and the circular correction therefore;
Figure 16 is an illustrative view showing the moving direction of the object;

## EMBODIMENTS

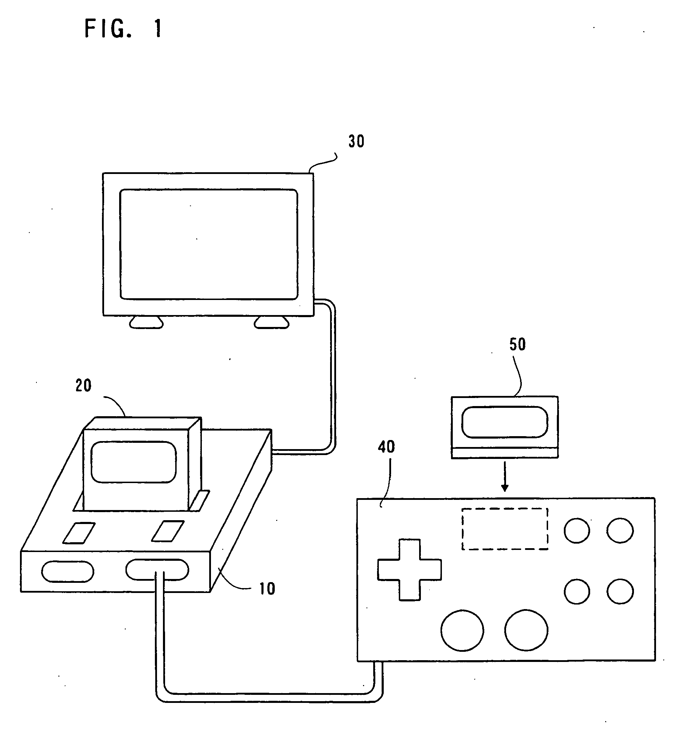

Referring to Figure 1, there is illustrated an external view showing a system structure of a three-dimension image processing system according to one embodiment of the present invention. The image processing system is for example a video game system, which inclusively comprises an image processing apparatus main body 10, a ROM cartridge 20 as one example of an external memory device, a monitor 30 as one example of a display means connected to the image processing apparatus main body 10, a controller 40 as one example of an operating means, and a RAM cartridge 50 as one example of an extension device detachably attached to the controller 40. Incidentally, the external memory device stores image data and program data for image processing for games, and audio data for music, effect sound, etc. A CD-ROM or a magnetic disc may alternatively be employed in place of the ROM cartridge. Where the image processing system of this example is applied to a personal computer, an input device such as a keyboard or a mouse is used as the operating means.

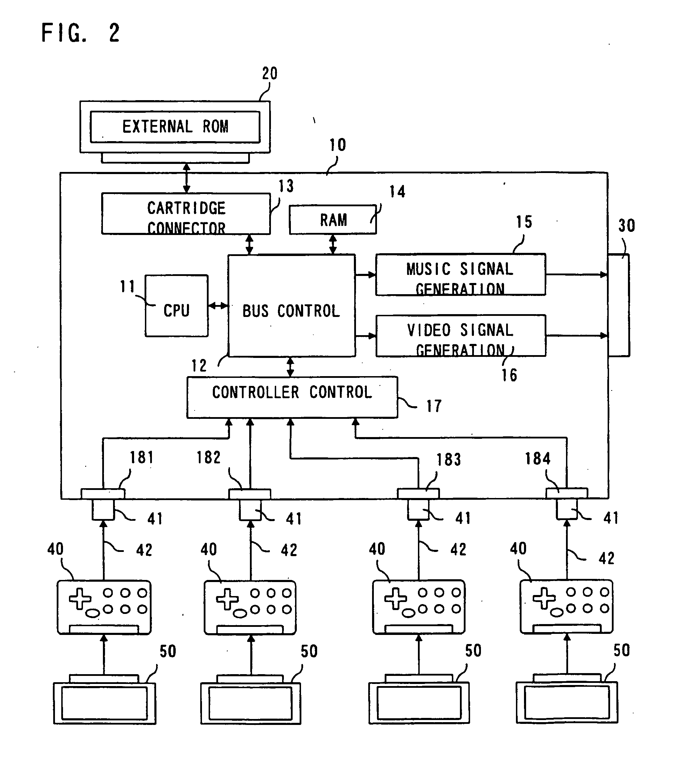

Figure 2 is a block diagram of the image processing system of this example. The image processing apparatus 10 incorporates therein a central processor unit (hereinafter "CPU") 11 and a bus control circuit 12. The bus control circuit 12 is connected with a cartridge connector 13 for detachably attaching the ROM cartridge 20, as well as a RAM 14. The bus control circuit 12 is connected with an audio signal generating circuit 15 for outputting an audio signal processed by the CPU 11 and a video signal generating circuit 16 for outputting a video signal, and further with a controller control circuit 17 for serially transferring operating data of one or a plurality of controller(s) 40 and/or data of RAM cartridge (s) 50. The controller control circuit 17 is connected with controller connectors (hereinafter abbreviated as "connectors") 181 - 184 which are to be provided at a front face of the image processing apparatus 10. To the connector 18 is detachably connected a connection jack 41 and the controller 40 through a cable 42. Thus, the connection of the controller 40 to the connector 181 - 184 places the controller 40 into electric connection to the image processing apparatus 10, enabling transmission and reception of data therebetween.

More specifically, the bus control circuit 12 receives a command outputted by a parallel signal from the CPU 11via a bus to parallel-serial convert it for outputting a command by a serial signal to the controller control circuit 17, and converts serial signal data inputted from the controller control circuit 17 into a parallel signal for outputting it to a bus. The data outputted through the bus is subjected to processing by the CPU 11, storing in RAM 14, and so on. In other words, the RAM 14 is a memory temporary storing the data to be processed by the CPU 11, wherein read-out and write-in of data is possible through the bus control circuit 12.

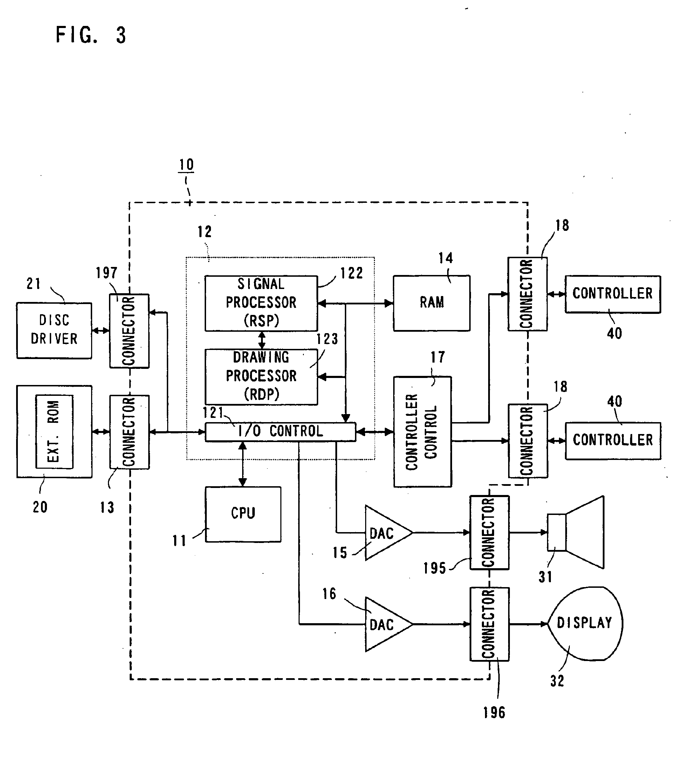

The bus control circuit 12, included in the image processing apparatus 10 in Fig. 2, is specifically structured by an RCP (Reality Co-Processor) as an RISC processor, as shown in Fig. 3, which includes an I/O control 121, a signal processor 122 and a drawing processor 123. The I/O control 121 controls not only the transfer of data between the CPU 11 and the RAM 13, but also the flow of data between the signal processor 122 or the drawing processor 123 and the RAM 14 or the CPU 11. That is, the data from the CPU 11 is delivered to the RAM 14 via the I/O control 121, and further the data from the RAM 14 is supplied to the signal processor 122 and the drawing processor 123 for being processed therein. The signal processor 122 and the drawing processor 123 respectively process music signal data and image signal data to store them again to the RAM 14. The I/O control 121 then reads the music signal data and the image signal data out of the RAM 14 according to instructions by the CPU 11 to supply respective signals to a music signal generating circuit (D/A converter) 15 and an image signal generating circuit (D/A converter) 16. The music signal is supplied via a connector 195 to a speaker 31 included in a TV monitor 30. The image signal is supplied via a connector 196 to a display 32 included in the TV monitor 30.

Incidentally, in place of or together with the external ROM 20 a disc driver 21 may be connected to the image processing apparatus 10 as shown in Fig. 3, wherein the disc driver can read out of or write in an optical disc or a magnetic disc. In this case, the disc driver 21 is connected to the RCP 12, i.e., the I/O control 121, through a connector 197.

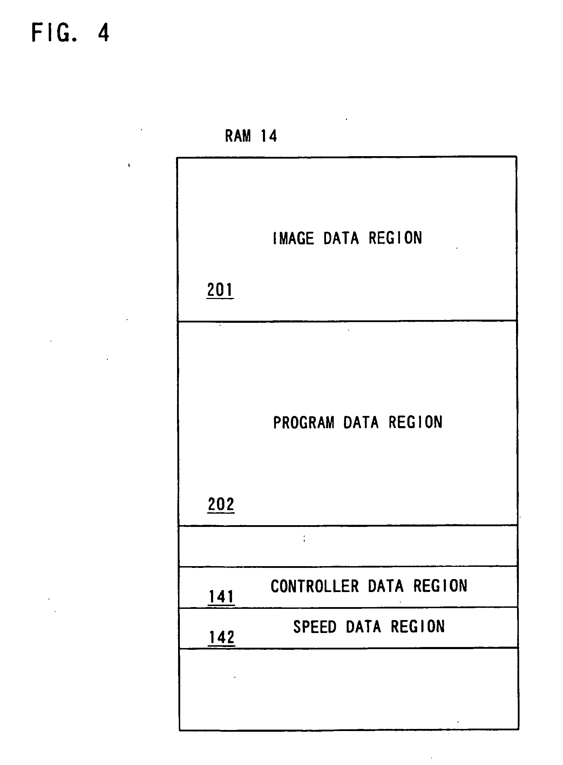

Fig. 4 is an illustrative diagram showing memory areas assigned to memory spaces of the CPU 11. The RAM accessible by the CPU via the bus control circuit, i.e., the RCP, 12 includes an image data region 201 stored with image data required to cause the image processing apparatus 10 to generate image signals for the game, and a program data region 202 stored with program data required for predetermined operation of the CPU 11. In the program data region 202, there fixedly stored are an image display program for performing image display based on image data 201, a time-measuring program for carrying out measurement of time, and a determination program for determining that the cartridge 20 and an extension device 50, hereinafter referred to, are in a predetermined relationship. The RAM 14 includes further a region 141 for temporarily storing data representative of an operating state from a control panel and a speed data region 142 for storing data on the speed of object movement (the amount of movement over which the object moves in one frame on the display).

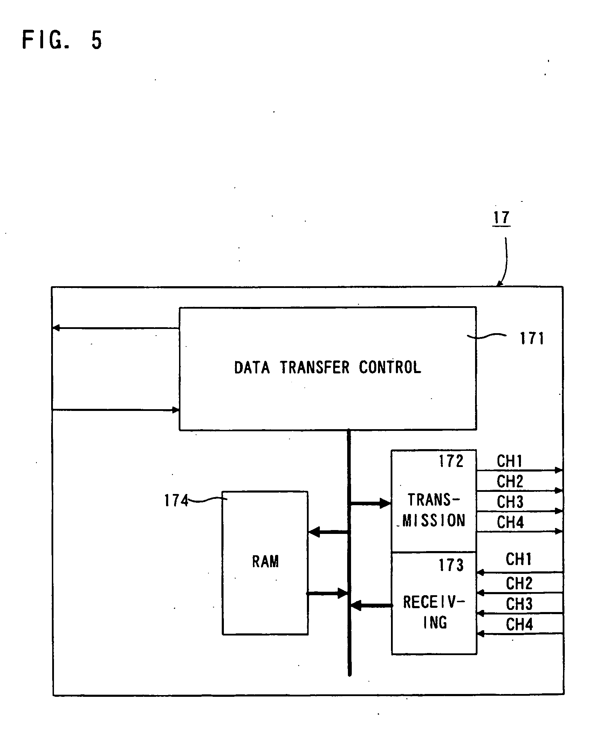

The controller control circuit 17 is provided for transmission and reception of data in serial between the bus control circuit 12, i.e., the RCP, and the connector 181 - 184, and includes as shown in Fig. 5 a data transfer control circuit 171, a signal transmitting circuit 172, a signal receiving circuit 173 and a RAM 174 for temporarily storing transmission and reception data. The data transfer control circuit 171 includes a parallel-serial conversion circuit and a serial-parallel conversion circuit for conversion of data format during data transfer, which also performs control of write-in and read-out of the RAM 174. The serial-parallel conversion circuit converts serial data supplied from the bus control circuit 12 into parallel data to provide it to the RAM 174 or the signal transmitting circuit 172. The parallel-serial conversion circuit converts parallel data supplied from the RAM 174 or the signal receiving circuit 173 into serial data to provide it to the bus control circuit 12. The signal transmission circuit 172 converts data for signal read-in control of the controller 40 supplied from the data transfer control circuit 171 and write-in data (parallel data) to the RAM cartridge 50 into serial data, which data is transmitted through a corresponding channel CH1 - CH4 to each of the plurality of controllers 40. The signal receiving circuit 173 receives in serial data, representative of an operating state of each of the controller 40, inputted through a corresponding channel CH1 - CH4 to each controller 40 as well as read-out data from the RAM cartridge 50, to convert them into parallel data to provide to the data transfer control circuit 171.

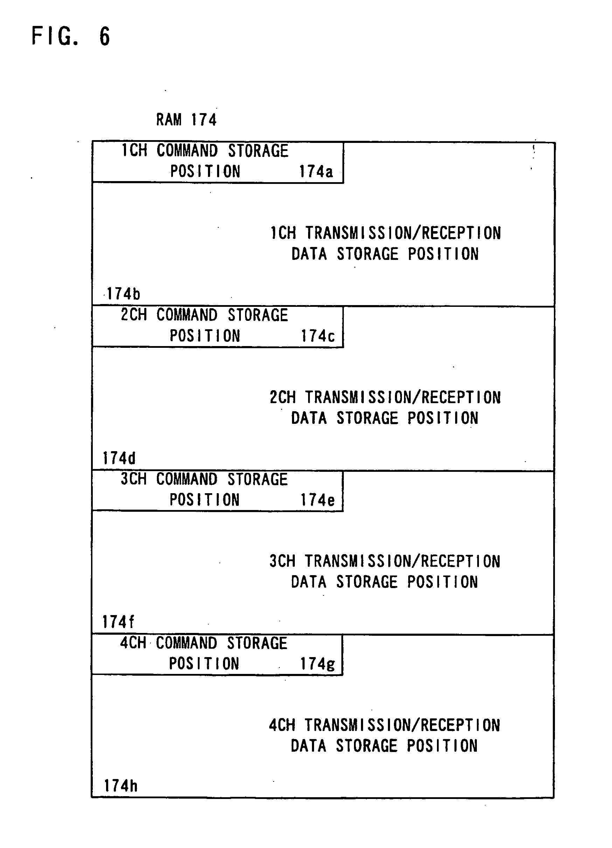

The RAM 174 of the controller control circuit 17 includes memory regions or memory areas 174a - 174h as shown in a memory map of Figure 6. Specifically, the area 174a is stored with a command for channel 1, while the area 174b is stored with transmission data and reception data for channel 1. The area 174c is stored with a command for channel 2, while the area 174d is stored with transmission data and reception data for channel 2. The area 174e is stored with a command for channel 3, while the area 174f is stored with transmission data and reception data for channel 3. The area 174g is stored with a command for channel 4, while the area 174h is stored with transmission data and reception data for channel 4.

Accordingly, the data transfer control circuit 171 operates to write-in control to the RAM 174 data transferred from the bus control circuit 12 or data of operating state of the controller 40 received by the signal receiving circuit 173 or read-out data from the RAM cartridge 50, and read data out of the RAM 174 based on a command from the bus control circuit 12 to transfer it to the bus control circuit 12.

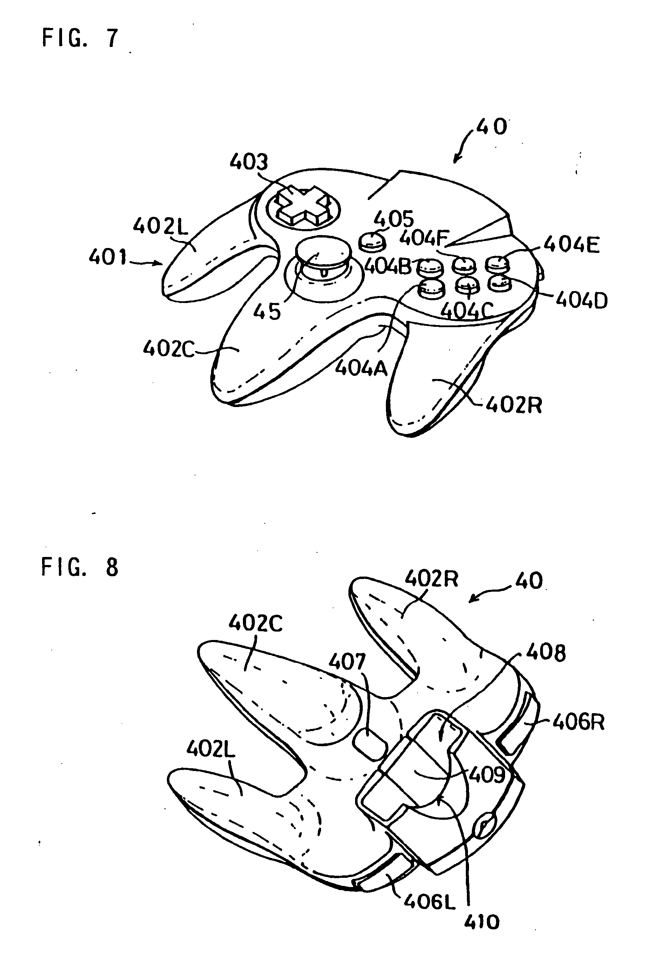

Figure 7 and Figure 8 are outside appearances at main and back surfaces of a controller 40. The controller 40 is in a shape that can be grasped by both hands or one hand, and has a housing having an exterior formed projecting with a plurality of buttons, when depressed, for generating an electric signal and a vertically-standing control portion. Specifically, the controller 40 is constituted by an upper housing and a lower housing. The housing of the controller 40 has an operating area formed on an upper surface in a planar shape long sideways. In the operating area of the controller 40, there are provided a cross-shaped digital direction switch (hereinafter referred to as "cross switch") 403 on a left side, a plurality of button switches (hereinafter merely abbreviated as "switches") 404A - 404F on a right side, a start switch 405 generally at a laterally central portion, and a joystick 45 for allowing analog inputting at a centrally lower portion. The cross switch 403 is a direction switch for designating the direction of movement of a heroic character or a cursor, which has upper, lower, left and right depression points to be used for designating movement in four directions. The switches 404A - 404F, being different by game soft, are used, for example, to launch a missile in a shooting game, or designate various actions such as jumping, kicking, or taking a matter in an action game. Although the joystick 45 is used in place of the cross switch 403 to designate the direction of movement of an object, it can designate direction at the entire angular range over 360 degrees, being utilized as an analog direction designating switch.

The housing of the controller 40 has three grips 402L, 402C and 402R formed in a manner projecting downward from three locations of the operating area. The grips 402L, 402C and 402R are in such rod-shapes that, when seized by the hand, they are contoured by the palm, the middle finger, the medical finger and the little finger, each of which is formed a little thin at a base portion, thick at an intermediate portion and thinner toward an open end (downward in Figure 7). The lower housing of the controller 40 has an insertion aperture 409 formed at a centrally upper portion which projects from the underside for detachably attaching a RAM cartridge 50 as an extension device. The housing has a button switch 406L and a button 406R provided left and right on upper side faces thereof at locations corresponding to the positions to which the left and right index fingers of a player extend. In a back surface at the base portion of the central grip 402C, a switch 407 is provided as a switch having a function alternative to the switch 406L when the joystick 45 is used in place of the cross switch 403.

The lower half of the housing on a back surface side extends toward a bottom surface to have an aperture 408 formed at a tip end thereof. At a deep end of the aperture 408, a connector (not shown) to which an extension cartridge 50 is to be connected is provided. In the aperture 408 is also formed a lever 409 for ejecting the cartridge 50 inserted in the aperture 408. On a side opposite to the lever 409 in the aperture 408 for insertion of an extension cartridge 50, a cut-out 410 is formed, which cut-out 410 provides a space for pulling out the extension cartridge 50 upon taking out the extension cartridge 50 by using the lever 409.

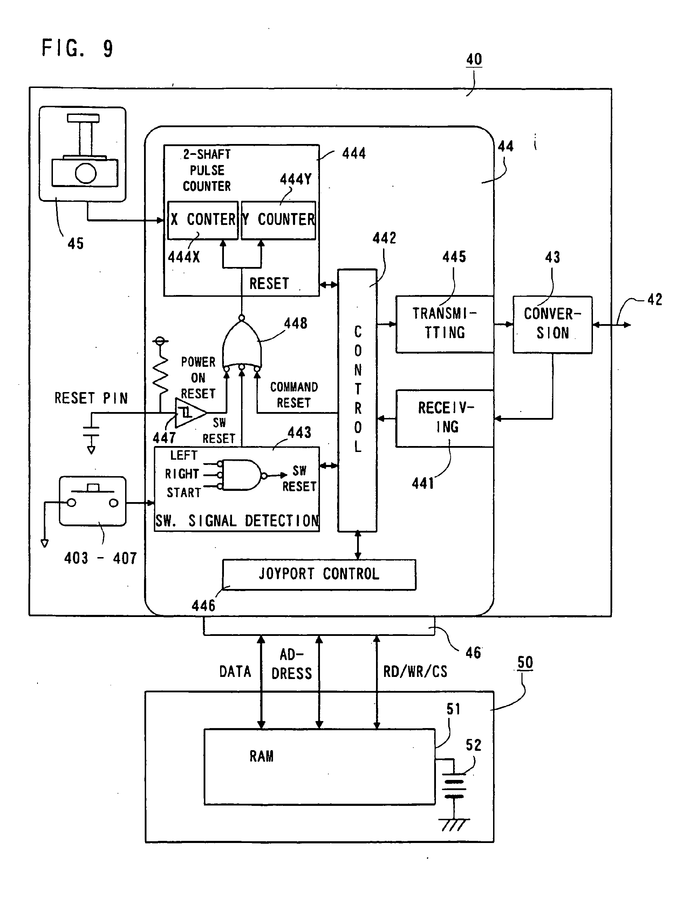

Figure 9 is a detailed circuit diagram of a controller 40 and a RAM cartridge 50 as one example of an extension device. The controller 40 incorporates within the housing electronic circuits such as operation signal processing circuit 44, etc. in order to detect operating states of the switches 403 - 407 or the joystick 45 or the like and transfer detected data to the controller control circuit 17. The operation signal processing circuit 44 includes a signal receiving circuit 441, a control circuit 442, a switch signal detecting circuit 443, a counter circuit 444, a signal transmitting circuit 445, a joyport control circuit 446, a reset circuit 447 and a NOR gate 448.

The signal receiving circuit 441 converts a serial signal, such as a control signal transmitted from the controller control circuit 17, write-in data to the RAM cartridge 50, etc., into a parallel signal to supply it to the control circuit 442. The control circuit 442 generates a reset signal to cause resetting (0) on measured values of an X-axis counter 444X and a Y-axis counter 444Y included in the counter 444, when the control signal transmitted from the controller control circuit 17 is a reset signal for an X, Y coordinate of the joystick 45. The joystick 45 includes photo-interrupters for X-axis and Y-axis so as to generate the number of pulses proportional to the amount of inclination of a lever in directions of X-axis and Y-axis, providing respective pulse signals to the counters 44X and 444Y. The counter 444X, when the joystick 45 is inclined in the X-axis direction, measures the number of pulses generated in proportion to the amount of inclination. The counter 444Y measures the number of pulses generated in proportion to the amount of inclination, when the joystick 45 is inclined in the Y-axis direction. Accordingly, the resultant vector, determined by the measured values in X-axis and Y-axis of the counter 444X and the 444Y, determines the moving direction and the moving speed for the object or the cursor.

Incidentally, the counter 444X and the counter 444Y are also reset of their measured values by a reset signal supplied from the reset signal generating circuit 447 upon turning on the power supply, or a reset signal supplied from the switch signal detecting circuit 443 when the player depresses simultaneously two switches previously determined.

The switch signal detecting circuit 443 responds to an output command signal representing a switch state supplied at a constant period (e.g., at a 1/30-second interval in a frame period of a television), and reads a signal that is varied by the state of depression of the cross switch 403 and the switches 404A - 404F, 405, 406L, 406R and 407 to supply it to the control circuit 442.

The control circuit 442 responds to a read-out command signal of operating sate data from the controller control circuit 17, and supplies the operating state data on the switches 403 - 407 and the measuring values of the counters 444X, 444Y to the signal transmitting circuit 445 in a predetermined data-format order. The signal transmitting circuit 445 converts these parallel signals outputted from the control circuit 442 into serial data to transfer them to the controller control circuit 17 via a conversion circuit 43 and a signal line 42.

To the control circuit 442 are connected an address bus, a data bus, and a port control circuit 446 through a port connector. The port control circuit 446 performs input-output control (or signal transmission or reception control) on data according to commands by the CPU 11, when the RAM cartridge 50 as one example of an extension device is connected to a port connector 46. The RAM cartridge 50 allows a RAM 51 to be connected to the address bus and the data bus, which includes a battery 52 for supplying power source to the RAM 51. The RAM 51 is a RAM that has a capacity lower than a half of a maximum memory capacity accessible by using an address bus, and comprised for example of a 256 k-bit RAM. The RAM 51 stores backup data associated with a game, so that, if the RAM cartridge 50 is removed out of the port connector 46, the stored data is kept by receiving power supply from the battery 52.

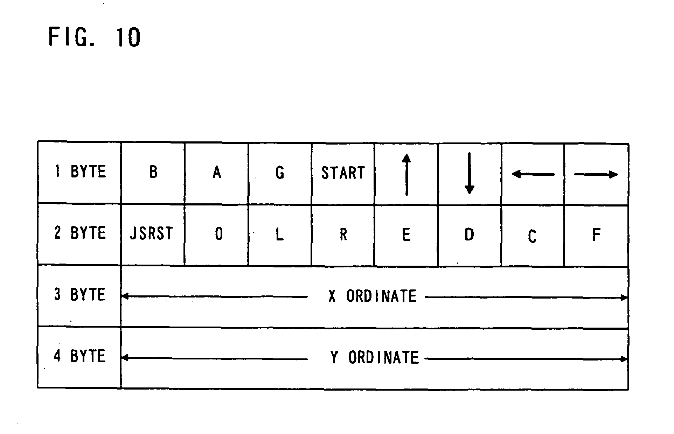

Figure 10 is a graphical illustration of a data format by which the image processing apparatus read out data representative of an operating state of switches 403-407 and joystick 45 from the controller 40. The data generated by the controller 40 is configured by 4-byte data. The first-byte data represents B, A, G, START, upper, lower, left and right, i.e., the depression of pressing points for upper, lower, left and right of the switch 404B, 404A, 407, 405 and the cross switch 403. For example, when the button B, i.e., the switch 404B, is depressed, the highest order bit of the first byte becomes "1". Similarly, the second-byte represents JSRST, 0 (not employed in the embodiment), L, R, E, D, C and F, i.e., the depression of the switch 409, 406L, 406R, 404E, 404D, 404C and 404F. The third byte represents by binary digit the X coordinate value (measured value by the X counter 444X) which value is in dependence upon inclination angle of the joystick 45 in the X direction. The fourth byte represents by binary digit the Y coordinate value (measured value by the Y counter 444Y) which value is in dependence upon inclination angle of the joystick 45 in the Y direction. Because the X and Y coordinate values are expressed by 8 bits of binary digit, the conversion of them into decimal digit makes possible representation of the inclination of the joystick 45 by a numeral of from 0 - 255. If the highest order bit is expressed by a signature denoting a negative value, the inclination angle of the joystick 45 can be expressed by a numeral between -128 and 127.

Then explanations will be made on the transmission and reception of data between the image processing apparatus 10 and the controller 40, as well as the operation as to movement control for the object according to the data from the controller 40.

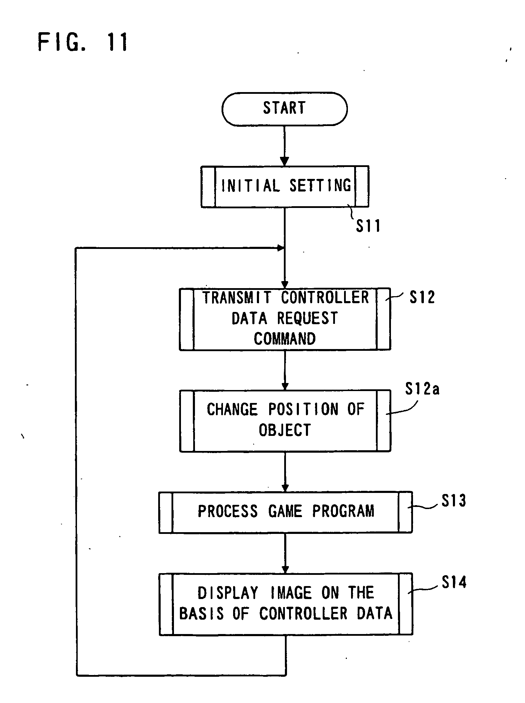

Referring first to a flowchart for the CPU 11 of the image processing apparatus 10 in Figure 11, explanations will be made for image processing. At a step S11, initial setting is made by the CPU 11 based on an initial value (not shown) stored in the program data area 202 in Figure 5. At the step S11, the CPU 11 set for example the initial value of the moving speed of the object in the program data region 142 (figure 4) of the RAM 14. Then, at a step S12, the CPU 11 outputs a control pad data request command stored in the program data area 202 to the RCP, or the bus control circuit 12. Accordingly, at the step S12, the CPU 11 receives commands as shown in Fig. 10 at that time to store them to command accommodating sites 174a - 174d for respective channels. At this time, the count values of the X counter 444X and the Y counter 444Y therefore are provided to the CPU 11 as XY coordinate data.

Then at a step S12a the CPU 11 execute processes to alter the position of the object in accordance with joystick data from the controller 40 which has been stored in the command accommodating sites 174a - 174d for channels (Fig.

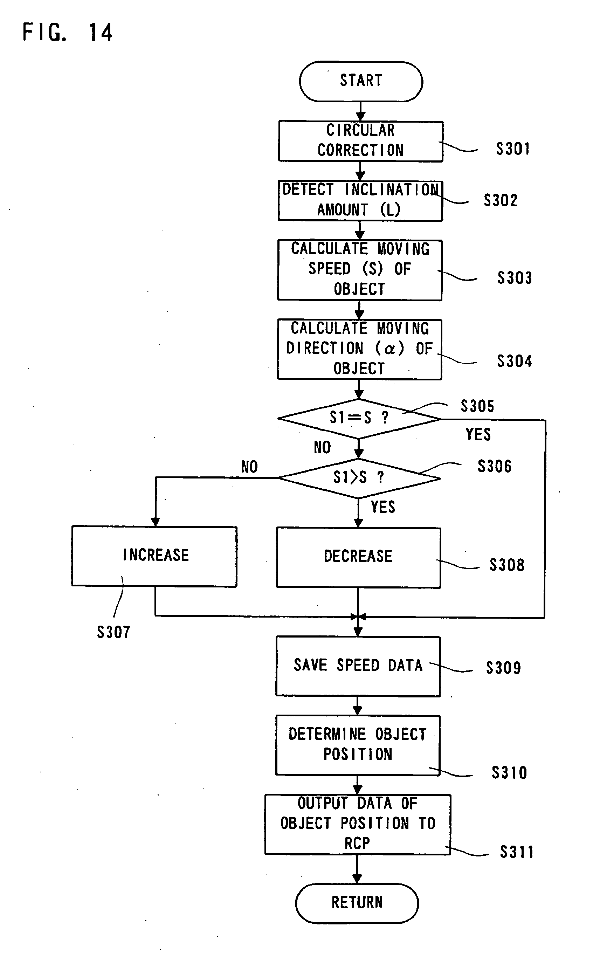

6). Note that the step S12a will be explained in detail later with reference to Fig. 14.

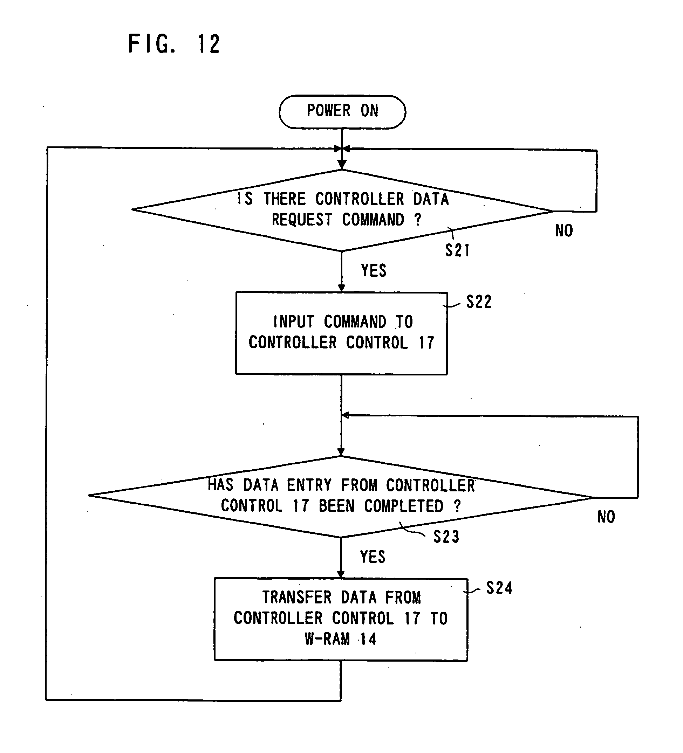

At a step S13, the CPU 11 carries out a predetermined image processing based on the program stored in the program data area 202 and the image data area 201. While the CPU 11 is executing the step S13, the bus control circuit 12 is under execution of steps S21 - S24 shown in Figure 12. Then, at a step S14, the CPU 11 outputs image data based on the control pad data stored in the control pad data area 141 in Figure 3. After completing step S14, the CPU 11 repeats to execute steps S12 - S14.

The operation of the RCP or the bus control circuit 12 will be explained by using Figure 12. At a step S21, the bus control circuit 12 determines whether or not the CPU 11 has outputted a controller data request command (a request command for data on switches of the controller 40 or data on the extension device 50). If no controller data request command has been outputted, it is waited for outputting. If a controller data request command has been outputted, the process proceeds to a step S22. At the step S22, the bus control circuit 12 outputs a command for reading in data of the controller 40 to the controller control circuit 17. Then, at a step S23, the bus control circuit 12 determines whether or not the controller control circuit 17 has received data from the controller 40 to store it in the RAM 174. If the controller control circuit 17 has not received data from the controller 40 to store in the RAM 174, the bus control circuit 12 waits at the step S23, while if the controller control circuit 17 has received data from the controller 40 to store it in the RAM 174, the process proceeds to a step S24. At the step S24, the bus control circuit 12 transfers the data of the controller 40 stored in the RAM 174 to the RAM 14. The bus control circuit 12, when completing the data transfer to the RAM 14, returns the process back to the step S21 to repeat execution of the step S21 - the step S24.

Incidentally, the flowcharts of Figure 11 and Figure 12 exemplified the example wherein, after the bus control circuit 12 has transferred data from the RAM 174 to the RAM 14, the CPU 11 processes the data stored in the RAM 14. However, the CPU 11 may directly process the data in the RAM 174 through the bus control circuit 12.

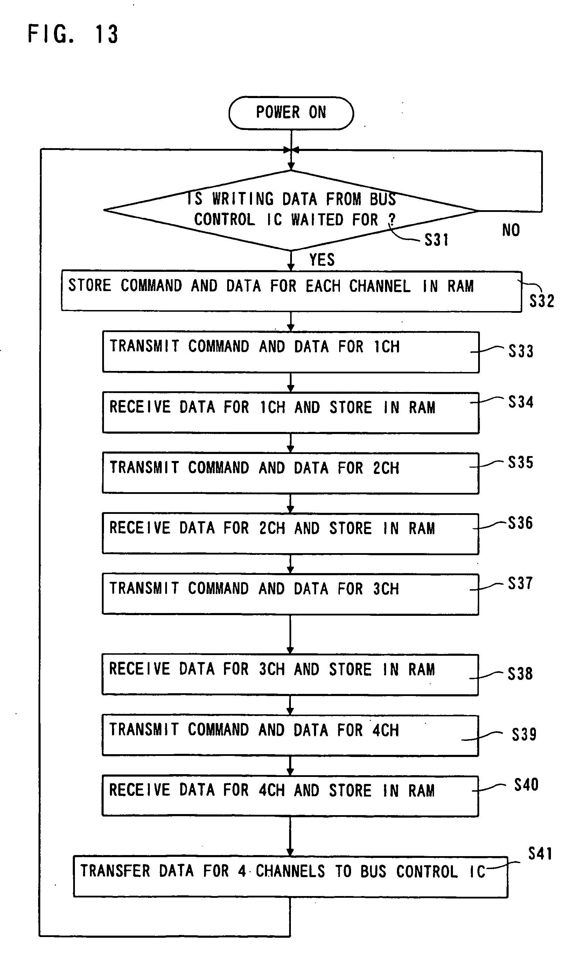

Figure 13 is a flowchart for explaining the operation of the controller control circuit 17. At a step S31, the presence or absence of waiting for write-in from the bus control circuit 12 is determined. If not waited for write-in, the data transfer control circuit 171 waits until there comes to waiting for write-in from the bus control circuit 12. If waiting for write-in, at a next step S32 the data transfer control circuit 171 causes the RAM 174 to store commands for the first to the fourth channels and/or data (hereinafter abbreviated as "command/data"). At a step S33, the command/data for the first channel is transmitted to the controller 40 being connected to the connector 181. The control circuit 442 performs a predetermined operation based on the command/data to output data to be transmitted to the image processing apparatus 10. The content of the data will be stated later in explaining the operation of the control circuit 442. At a step S34, the data transfer control circuit 171 receives data outputted from the control circuit 442, to cause the RAM to store the data.

From now on, at a step S35 the command/data for the second channel is transmitted to the controller 40, in a manner similar to the operation for the first channel at the steps S33 and S34. The control circuit 442 performs a predetermined operation based on this command/data to output the data to be transmitted to the image processing apparatus 10. At a step S36 are carried out the processes of data transfer and write-in for the second channel. Meanwhile, at a step S37, the command/data for the fourth channel is transmitted to the controller 40. The control circuit 442 performs a predetermined operation based on this command/data to output the data to be transmitted to the image processing apparatus 10. At a step S38 are carried out the processes of data transfer and write-in for the third channel. Furthermore, at a step S39, the command/data for the fourth channel is transmitted to the controller 40. The control circuit 442 of the controller 40 performs a predetermined operation based on this command/data to output the data to be transmitted to the image processing apparatus 10. At a step S40 are carried out the processes of data transfer and write-in for the fourth channel. At a subsequent step S41, the data transfer circuit 171 transfer in batch the data which have received at the steps S34, S36, S38 and S40 to the bus control circuit 12.

In the manner as stated above, the data for the first channel to the fourth channel, that is, the commands for the controllers 40 being connected to the connectors 181 - 184 and the operating state data to be read out of the controllers 40, are transferred by time-divisional processing between the data transfer control circuit 171 and the control circuit 442 respectively within the controllers 40.

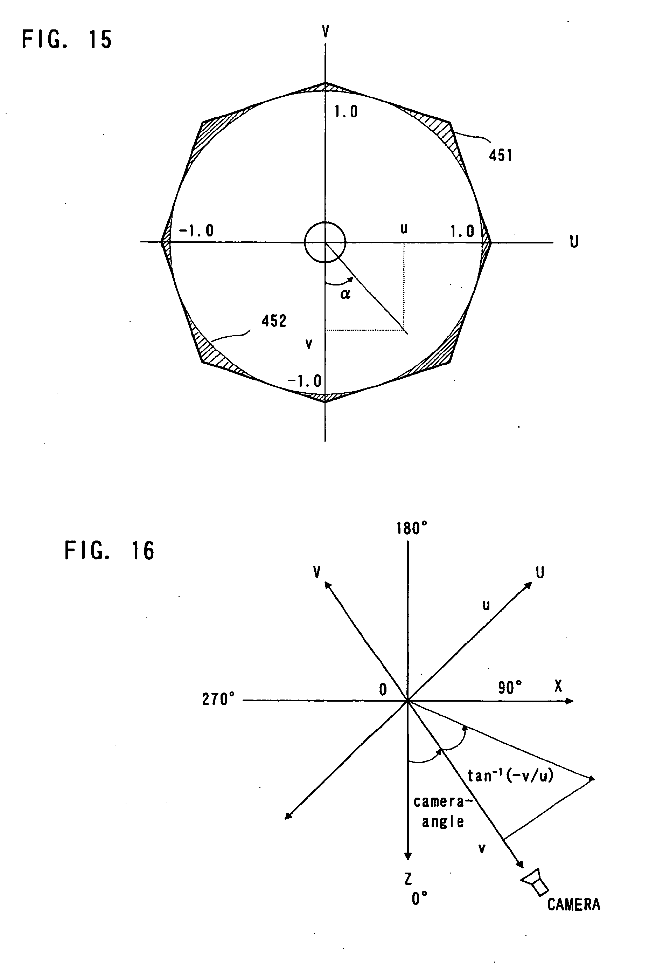

With referring to Figure 14 the step S12a in Fig. 11 will be explained in detail. At a first step S301 in Figure 11, the CPU 11 makes correction to the joystick data, i.e., the X coordinate data and the Y coordinate data, from the controller 40. The joystick 45 (Figure 7) has a structure that can be inclined within an octagonal range 451 in a plane as shown Fig. 15, and accordingly at the step S301 the data within the octagonal range of inclination is converted or corrected into data within a circular range 452. Incidentally, there is no necessity of especially executing the correcting step. That is, the subsequent steps may be executed by the data of the octagonal inclination range.

At the step S301, the XY coordinate data for the joystick 45 is converted into coordinate data (u, v) in an UV plane as shown in Fig. 15. On this occasion, the maximum amount of inclination of the joystick 45 is normalized to "1". That is, the joystick 45 in the UV plane in Figure 15 is allowed to incline within respective ranges of $-1.0 \leqq u \leqq 1.0$ and $-1.0 \leqq v \leqq 1.0$. This is because, since a square curve is utilized to calculate the moving speed S of the object as stated later, a low speed range thereof is to be extended. By doing so, it becomes possible to move the object at a considerably slow speed.

At subsequent steps S302, S303 and S304, the CPU 11 calculates or detects the amount of inclination L of the joystick 45, the moving speed S of the object and the moving direction α thereof according to following Equations (1), (2) and (3), based on the corrected joystick data (u, v),

$$L = \sqrt{u^2 + v^2} \qquad \dots (1)$$

$$S = L^2 \times \text{max - speed} \qquad \dots (2)$$

$$\alpha = \tan^{-1}(u / -v) + \text{camera-angle} \quad \dots (3)$$

where, L: the inclination amount of the joystick, u, v: the inclination amount in each axis (coordinate positions), S: the moving speed of the object, max-speed: self-running maximum speed (e.g., 32 cm/frame), α: the direction of object movement. Equation (3) means that in a three-dimensional space the direction α of object movement is determined by the relative relations between the direction of joystick 45 inclination and the angle of a camera (camera-angle).

After calculating respectively at the steps S302, S303 and S304 the inclination amount L of the joystick, the moving speed S of the object and the moving direction α thereof in accordance with Equations (1), (2) and (3), the CPU 11 at a step S305 compares the actual moving speed S1 of the object in the previous frame stored at the speed data region 142 of the RAM 14 with the speed S calculated at the step S303, determining whether they are equal to or not. If they are not coincident (S1 ≠ S), the CPU 11 determines whether S1 > S stands or not at a next step S306.

If the determination is "No" at the step S306, the process of acceleration is executed at a step S307, while if "Yes" is determined the process of deceleration is executed at a step S308. In the acceleration process at the step S307, a predetermined acceleration A is added to the actual moving speed S1 in the previous frame according to Equation (4). Note that the acceleration A is provided as one example by following Equation (5):

$$S = S1 + A \qquad \dots (4)$$

$$A = 1.1 - S1 / 43.0 \qquad \dots (5)$$

Also, in the deceleration process at the step S308, a predetermined deceleration B is subtracted from the actual moving speed S1 in the previous frame according to Equation (6). Note that the deceleration B is provided as one example by following Equation (7):

$$S = S1 - B \qquad \dots (6)$$

$$B = 2.0 \qquad \dots (7)$$

The reason of determining in Equation (5) the acceleration A based on the speed S1 in the previous frame is to avoid against abrupt change of speed. Although in Equation (7) the deceleration B was set as a constant, it may alternatively be set as a function of moving speed S1 in the previous frame in a manner similar to the acceleration A. Furthermore, the acceleration A may be a constant value.

If "Yes" is determined at the step S305, the process proceeds to a step S309 in a manner similar to the case of executing the steps S307 or S308. At the step S309, either of the moving speed S determined at the step S307 or the moving speed determined at the step S308 is written in the speed data region 142 of the RAM 14, thereby updating the speed data.

At a next step S310, the position x and z of the object is calculated according to following Equations (8) and (9), based on the moving speed thus determined. That is, the position of the object is determined by the vector amount S and the vector angle α.

$$x = x + S \times \sin \alpha \qquad \qquad \dots \quad (8)$$

$$z = z + S \times \cos \alpha \qquad \qquad \dots \quad (9)$$

At a step S311, the CPU 11 outputs the position data determined by Equations (8) and (9) to the bus control circuit, or the RCP, 12. In response, the RCP 12 executes signal processing and image processing in dependence upon the object position data given thereto, and outputs image data through the I/O control 12 to the D/A converter 16.

In this manner, the moving direction and the moving amount (moving speed) of the object are determined in the above example based on the inclination amount data for the joystick of the controller 40, thereby varying the position of the object in the three-dimensional space. In other words, the object is displayed at a position thus varied in the next frame on the display 32 (monitor 30).

**Claims**

1. A three-dimensional image processing system including an image processing apparatus (10) connected to a display (30) to generate image data for displaying an object existing in a three-dimensional space on said display, and an operating device (40) including an operating member (45) having a base end rotatably supported, a free end operable by an operator, and an inclination amount data output means which detects an inclination amount to output inclination amount data, so that the image data is varied depending on movement of said operating member, wherein a computer readable medium is stored with a program for generating the image data, said program further comprising instructions for directing the image processing apparatus to:

   (a) determine a moving direction of the object in the three-dimensional space based on an inclination direction of said operating member;
   (b) determine a moving speed of the object on said display based on the inclination amount;
   (c) determine a position of the object in the three-dimensional space depending on the moving direction and the moving speed; and
   (d) output the image data for displaying the object at the position thus determined,

   **characterised in that**
   said image processing apparatus includes a storing means (142) that stores an actual moving speed of the object, and said program is adapted in said step (b) for (b1) determining (S303) the moving speed based on the inclination amount data, (b2) comparing (S306) the actual moving speed stored by said storing means (142) with the determined moving speed, and (b3) increasing (S307, S308) or decreasing the determined moving speed depending on the comparing result.

2. A three-dimensional image processing system according to claim 1, wherein said program is adapted for determining the moving speed from a moving speed which is calculated based on the inclination amount data and a predetermined value.

3. A three-dimensional image processing system according to claim 1, wherein said program is adapted for increasing and decreasing the determined moving speed in accordance with a function of moving speed stored by said moving speed storing means.

4. A three-dimensional image processing system according to claim 1, wherein said program is adapted for increasing and decreasing the determined moving speed in accordance with a constant value.

5. A three-dimensional image processing system according to any of claims I to 4, wherein said program is adapted for (a1) calculating the inclination direction based on the inclination amount data, and (a2) determining the moving direction based on the inclination direction and a camera angle at which said object is being viewed by said operator in said three-dimensional space.

**Patentansprüche**

1. Ein dreidimensionales Bildverarbeitungssystem, aufweisend eine an eine Anzeige (30) angeschlossene Bildverarbeitungsvorrichtung (10) zum Erzeugen von Bilddaten zum Anzeigen eines in einem dreidimensionalen Raum existierenden Objektes auf der Anzeige, und eine Betätigungsvorrichtung (40), die ein Betätigungselement (45) aufweist, das ein schwenkbar abgestütztes Basisende und ein durch eine Bedienungsperson betätigbares freies Ende hat, und ein Mittel zur Neigegraddatenausgabe, welches einen Neigegrad detektiert, um Neigegraddaten auszugeben, so dass die Bilddaten abhängig von der Bewegung des Betätigungselementes verändert werden, wobei ein computerlesbares Medium mit einem Programm zum Erzeugen der Bilddaten bespeichert ist, wobei das Programm ferner Anweisungen zum Anweisen der Bildverarbeitungsvorrichtung enthält zum:

   (a) Bestimmen einer Bewegungsrichtung des Objektes in dem dreidimensionalen Raum basierend auf einer Neigerichtung des Betätigungselements;
   (b) Bestimmen einer Bewegungsgeschwindigkeit des Objektes auf der Anzeige basierend auf dem Neigegrad;
   (c) Bestimmen einer Position des Objektes in dem dreidimensionalen Raum in Abhängigkeit von der Bewegungsrichtung und der Bewegungsgeschwindigkeit; und
   (d) Ausgeben der Bilddaten zur Darstellung des Objekts an der bestimmten Position,

   **dadurch gekennzeichnet, dass**
   das Bildverarbeitungsgerät ein Speicherungsmittel (142) enthält, das eine aktuelle Bewegungsgeschwindigkeit des Objektes speichert, und das Programm im Schritt (b) geeignet ist zum (b1) Bestimmen (S303) der aktuellen Bewegungsgeschwindigkeit basierend auf den Neigegraddaten, (b2) Vergleichen (S306) der aktuellen vom Speicherungsmittel (142) gespeicherten Bewegungsgeschwindigkeit mit der bestimmten Bewegungsgeschwindigkeit, und (b3) Erhöhen (S307, S308) oder Erniedrigen der bestimmten Bewegungsgeschwindigkeit in Abhängigkeit von dem Vergleichsergebnis.

2. Dreidimensionales Bildverarbeitungssystem gemäß Anspruch 1, wobei das Programm geeignet ist zum Bestimmen der Bewegungsgeschwindigkeit aus einer Bewegungsgeschwindigkeit, die auf den Neigegraddaten und einem vorbestimmten Wert basierend berechnet wird.

3. Dreidimensionales Bildverarbeitungssystem gemäß Anspruch 1, wobei das Programm geeignet ist zum Erhöhen und Erniedrigen der bestimmten Bewegungsgeschwindigkeit in Übereinstimmung mit einer Funktion der Bewegungsgeschwindigkeit, die in dem Bewegungsgeschwindigkeit-Speicherungsmittel gespeichert ist.

4. Dreidimensionales Bildverarbeitungssystem gemäß Anspruch 1, wobei das Programm geeignet ist zum Erhöhen und Erniedrigen der bestimmten Bewegungsgeschwindigkeit in Übereinstimmung mit einem konstanten Wert.

5. Dreidimensionales Bildverarbeitungssystem gemäß einem der Ansprüche 1 bis 4, wobei das Programm geeignet ist zum (a1) Berechnen der Neigegradrichtung basierend auf den Neigegraddaten, und (a2) Bestimmen der Bewegungsrichtung basierend auf der Neigerichtung und einem Kamerawinkel, unter welchem das Objekt von der Bedienungsperson im dreidimensionalen Raum betrachtet wird.

**Revendications**

1. Système de traitement d'image tridimensionnelle incluant un appareil de traitement d'image (10) raccordé à un dispositif de présentation (30) pour générer une donnée d'image afin de présenter un objet existant dans un espace tridimensionnel sur ledit dispositif de présentation, et un dispositif de commande (40) incluant un élément de commande (45) possédant une extrémité de base supportée de façon à pouvoir tourner, une extrémité libre pouvant être commandée par un opérateur, et un moyen de délivrance de donnée de quantité d'inclinaison qui détecte une quantité d'inclinaison afin de délivrer une donnée de quantité d'inclinaison, de sorte que la donnée d'image est modifiée en fonction du déplacement dudit élément de commande, un support lisible par ordinateur comportant en mémoire un programme destiné à générer ladite donnée d'image, ledit programme comprenant en outre des instructions pour ordonner à l'appareil de traitement d'image de ;

(a) déterminer une direction de déplacement de l'objet dans l'espace tridimensionnel en se fondant sur une direction d'inclinaison dudit élément de commande ;

(b) déterminer une vitesse de déplacement de l'objet sur ledit dispositif de présentation en se fondant sur la quantité d'inclinaison ;

(c) déterminer une position de l'objet dans l'espace tridimensionnel en fonction de la direction de déplacement et de la vitesse de déplacement ; et

(d) délivrer la donnée d'image afin de présenter l'objet à la position ainsi déterminée,

**caractérisé en ce que**

ledit appareil de traitement d'image inclut un moyen de mémorisation (142) qui mémorise une vitesse de déplacement réelle de l'objet, et ledit programme est adapté à ladite étape (b) pour (b1) déterminer (S303) la vitesse de déplacement en se fondant sur la donnée de quantité d'inclinaison, (b2) comparer (S306) la vitesse de déplacement réelle mémorisée par ledit moyen de mémorisation (142) avec la vitesse de déplacement déterminée, et (b3) augmenter (S307, S308) ou réduire en fonction du résultat de la comparaison la vitesse de déplacement déterminée.

2. Système de traitement d'image tridimensionnelle selon la revendication 1, dans lequel ledit programme est adapté pour déterminer la vitesse de déplacement à partir d'une vitesse de déplacement qui est calculée en se fondant sur la donnée de quantité d'inclinaison et sur une valeur prédéterminée.

3. Système de traitement d'image tridimensionnelle selon la revendication 1, dans lequel ledit programme est adapté pour augmenter et réduire la vitesse de déplacement déterminée conformément à une fonction de vitesse de déplacement mémorisée dans ledit moyen de mémorisation de vitesse de déplacement.

4. Système de traitement d'image tridimensionnelle selon la revendication 1, dans lequel ledit programme est adapté pour augmenter et réduire conformément à une valeur constante la vitesse de déplacement déterminée.

5. Système de traitement d'image tridimensionnelle selon l'une quelconque des revendications 1 à 4, dans lequel ledit programme est adapté pour (a1) calculer la direction d'inclinaison en se fondant sur la donnée de quantité d'inclinaison, et (a2) déterminer la direction de déplacement se fondant sur la direction d'inclinaison et un angle de caméra avec lequel ledit objet est vu par ledit opérateur dans ledit espace tridimensionnel.

FIG. 1

# FIG. 2

# FIG. 3

# FIG. 4

RAM 14

| |
|---|
| IMAGE DATA REGION<br><br>_201_ |
| PROGRAM DATA REGION<br><br>_202_ |
| : |
| _141_  CONTROLLER DATA REGION |
| _142_  SPEED DATA REGION |
| |

FIG. 5

17

DATA TRANSFER CONTROL — 171

174

RAM

172
TRANS-
MISSION

CH1
CH2
CH3
CH4

173
RECEIV-
ING

CH1
CH2
CH3
CH4

# FIG. 6

RAM 174

| 1CH COMMAND STORAGE POSITION 174a | |
|---|---|
| 1CH TRANSMISSION/RECEPTION DATA STORAGE POSITION 174b | |
| 2CH COMMAND STORAGE POSITION 174c | |
| 2CH TRANSMISSION/RECEPTION DATA STORAGE POSITION 174d | |
| 3CH COMMAND STORAGE POSITION 174e | |
| 3CH TRANSMISSION/RECEPTION DATA STORAGE POSITION 174f | |
| 4CH COMMAND STORAGE POSITION 174g | |
| 4CH TRANSMISSION/RECEPTION DATA STORAGE POSITION 174h | |

FIG. 7

FIG. 8

FIG. 9

FIG. 10

| 1 BYTE | B | A | G | START | ↑ | ↓ | ← | → |
|--------|------|---|---|-------|---|---|---|---|
| 2 BYTE | JSRST | 0 | L | R | E | D | C | F |
| 3 BYTE | ◀————————————— X ORDINATE —————————————▶ | | | | | | | |
| 4 BYTE | ◀————————————— Y ORDINATE —————————————▶ | | | | | | | |

# FIG. 11

```
        ┌──────────┐
        │  START   │
        └────┬─────┘
             ↓
     ┌────────────────┐
     │ INITIAL SETTING│
     └────────────────┘
                  └ S11

     ┌────────────────────┐
     │ TRANSMIT CONTROLLER│ ─ S12
     │   DATA REQUEST     │
     │     COMMAND        │
     └────────────────────┘
             ↓
     ┌────────────────────┐     S12a
     │ CHANGE POSITION OF │
     │      OBJECT        │
     └────────────────────┘
             ↓
     ┌────────────────────┐
     │ PROCESS GAME PROGRAM│ ─ S13
     └────────────────────┘
             ↓
     ┌────────────────────┐      S14
     │ DISPLAY IMAGE ON THE│
     │BASIS OF CONTROLLER DATA│
     └────────────────────┘
```

FIG. 12

POWER ON

IS THERE CONTROLLER DATA
REQUEST COMMAND ?          NO

S21

YES

INPUT COMMAND TO
CONTROLLER CONTROL 17          S22

HAS DATA ENTRY FROM CONTROLLER
CONTROL 17 BEEN COMPLETED ?          NO

S23

YES

TRANSFER DATA FROM
CONTROLLER CONTROL 17 TO
W-RAM 14          S24

# FIG. 13

```
        ┌──────────────┐
        │   POWER ON   │
        └──────┬───────┘
               │
               ▼
    ╱─────────────────────────╲
   ╱  IS WRITING DATA FROM BUS  ╲      NO
  ◁   CONTROL IC WAITED FOR ?    ▷──────
   ╲                       S31  ╱
    ╲─────────────────────────╱
               │ YES
               ▼
┌──────────────────────────────────────────┐
│ STORE COMMAND AND DATA FOR EACH CHANNEL IN RAM │  S32
└───────────────────┬──────────────────────┘
                    ▼
┌──────────────────────────────────────────┐
│ TRANSMIT COMMAND AND DATA FOR 1CH         │  S33
└───────────────────┬──────────────────────┘
                    ▼
┌──────────────────────────────────────────┐
│ RECEIVE DATA FOR 1CH AND STORE IN RAM     │  S34
└───────────────────┬──────────────────────┘
                    ▼
┌──────────────────────────────────────────┐
│ TRANSMIT COMMAND AND DATA FOR 2CH         │  S35
└───────────────────┬──────────────────────┘
                    ▼
┌──────────────────────────────────────────┐
│ RECEIVE DATA FOR 2CH AND STORE IN RAM     │  S36
└───────────────────┬──────────────────────┘
                    ▼
┌──────────────────────────────────────────┐
│ TRANSMIT COMMAND AND DATA FOR 3CH         │  S37
└───────────────────┬──────────────────────┘
                    ▼
┌──────────────────────────────────────────┐
│ RECEIVE DATA FOR 3CH AND STORE IN RAM     │  S38
└───────────────────┬──────────────────────┘
                    ▼
┌──────────────────────────────────────────┐
│ TRANSMIT COMMAND AND DATA FOR 4CH         │  S39
└───────────────────┬──────────────────────┘
                    ▼
┌──────────────────────────────────────────┐
│ RECEIVE DATA FOR 4CH AND STORE IN RAM     │  S40
└───────────────────┬──────────────────────┘
                    ▼
┌──────────────────────────────────────────┐              S41
│ TRANSFER DATA FOR 4 CHANNELS TO BUS CONTROL IC │
└──────────────────────────────────────────┘
```

# FIG. 14

```
                    ┌─────────────┐
                    │    START    │
                    └─────────────┘
                           │
                           ▼
                  ┌───────────────────┐
                  │     CIRCULAR      │──── S301
                  │    CORRECTION     │
                  └───────────────────┘
                           │
                           ▼
                  ┌───────────────────┐
                  │ DETECT INCLINATION│──── S302
                  │    AMOUNT (L)     │
                  └───────────────────┘
                           │
                           ▼
                  ┌───────────────────┐
                  │  CALCULATE MOVING │
                  │   SPEED (S) OF    │──── S303
                  │      OBJECT       │
                  └───────────────────┘
                           │
                           ▼
                  ┌───────────────────┐
                  │  CALCULATE MOVING │
                  │  DIRECTION (α) OF │──── S304
                  │      OBJECT       │
                  └───────────────────┘
                           │
                           ▼
                        ╱──────╲        S305
                      ╱  S1=S ?  ╲──────────┐
                      ╲          ╱   YES     │
                        ╲──────╱             │
                           │ NO              │
                           ▼                 │
              NO        ╱──────╲   S306       │
          ┌───────────╱  S1>S ? ╲            │
          │           ╲         ╱            │
          │             ╲──────╱             │
          │                │ YES             │
          ▼                ▼                 │
   ┌─────────────┐  ┌─────────────┐          │
   │  INCREASE   │  │  DECREASE   │── S308    │
   └─────────────┘  └─────────────┘          │
          │                │                 │
        S307               ▼◄────────────────┘
                           │
                           ▼
                  ┌───────────────────┐
                  │  SAVE SPEED DATA  │──── S309
                  └───────────────────┘
                           │
                           ▼
                  ┌───────────────────┐
                  │  DETERMINE OBJECT │──── S310
                  │     POSITION      │
                  └───────────────────┘
                           │
                           ▼
                  ┌───────────────────┐
                  │  OUTPUT DATA OF   │
                  │ OBJECT POSITION TO│──── S311
                  │        RCP        │
                  └───────────────────┘
                           │
                           ▼
                    ┌─────────────┐
                    │   RETURN    │
                    └─────────────┘
```

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H241342 A
- US 4685678 A
- GB 2283302 A